# NEUE EUROPÄISCHE PATENTSCHRIFT

(11) **EP 1 343 668 B2**
(45) Veröffentlichungstag und Bekanntmachung des Hinweises auf die Entscheidung über den Einspruch: **12.09.2012**
(45) Hinweis auf die Patenterteilung: 21.01.2009
(21) Anmeldenummer: 01984864.7
(22) Anmeldetag: 18.12.2001
(51) Int. Cl.: B60T 7/12, B60T 11/10

(54) **VERFAHREN UND SYSTEM ZUR STEUERUNG EINER IM STILLSTAND EINES KRAFTFAHRZEUGES AKTIVIERBAREN BREMSAUSRÜSTUNG**
METHOD AND SYSTEM FOR CONTROLLING BRAKE EQUIPMENT WHICH CAN BE ACTIVATED WHEN A MOTOR VEHICLE IS STATIONARY
PROCEDE ET SYSTEME DE COMMANDE D'UN DISPOSITIF DE FREINAGE ACTIVABLE LORSQU'UN VEHICULE AUTOMOBILE EST A L'ARRET

(30) Priorität: 18.12.2000 DE 10063063
(43) Veröffentlichungstag der Anmeldung: 17.09.2003
(73) Patentinhaber: Lucas Automotive GmbH, 56070 Koblenz (DE)
(72) Erfinder: KINDER, Ralf, 56337 Eitelborn (DE); KLAPPER, Gerhard, 56154 Boppard (DE); SHOKOUFANDEH, Reza, Coventry CV3 6NY (GB); ENDRES, Franz-Josef, 56244 Sessenhausen (DE); LEITER, Ralf, 56179 Vallendar (DE); MAACK, Lorenz, 71032 Böblingen (DE); SÖNS, Andreas, 71120 Grafenau (DE)
(74) Vertreter: Schmidt, Steffen J.
(86) Internationale Anmeldenummer: PCT/EP2001/014943
(87) Internationale Veröffentlichungsnummer: WO 2002/049893

(56) Entgegenhaltungen:
- EP-A- 1 031 487
- EP-B1- 0 375 708
- EP-B1- 1 335 846
- DE-A1- 19 648 195
- DE-A1- 19 831 541
- DE-A1- 19 849 799
- DE-A1- 19 941 482
- DE-T2- 69 715 344
- US-A- 5 415 467
- US-A- 6 056 373

## Beschreibung

### Gebiet der Erfindung

Die vorliegende Erfindung betrifft ein Verfahren und ein System zur Steuerung einer Brems-ausrüstung eines Kraftfahrzeuges, die bei Stillstand des Kraftfahrzeuges zum Aufbau von Bremskräften automatisch gesteuert aktiviert werden kann, um das Kraftfahrzeug im Stillstand zu halten. Insbesondere betrifft die vorliegende Erfindung ein Verfahren und ein System, bei denen anhand von für einen Fahrbetrieb des Kraftfahrzeuges typischen Bewegungen, wie z.B. Nickbewegungen, ermittelt wird, ob sich das Kraftfahrzeug im Still-stand befindet oder nicht, um bei einem Stillstandszustand die Bremsausrüstung zu aktivieren.

### Hintergrund der Erfindung

Herkömmlicherweise wird ein Kraftfahrzeug im Stillstand gegen Wegrollen gesichert, indem eine Feststellbremse durch einen Fahrzeugführer per Hand oder Fuß betätigt wird. Diese im Stillstand durchgeführten Aktivierung der Feststellbremse stellt eine zusätzliche von dem Fahrzeugführer durchzuführende Maßnahme dar, die deshalb häufig nicht ergriffen wird. Dies kann beispielsweise dazu führen, dass ein geparktes Kraftfahrzeug aufgrund einer fehlenden Sicherung durch die Feststellbremse wegrollen kann.

Des weiteren wird die von der Feststellbremse im Stillstand bereitgestellte Bremskraft unmittelbar durch den Fahrzeugführer vorgegeben. Dabei ist insbesondere bei Kraftfahrzeugen, die sich an einer Steigung oder einem Gefälle befinden, nicht gewährleistet, dass die so erzeugte Bremskraft der Feststellbremse ausreicht, um das Kraftfahrzeug im Stillstand zu halten.

### Stand der Technik

Aus der DE-OS-24 20 252 ist es bekannt, eine Feststellbremse eines Kraftfahrzeuges in Abhängigkeit einer Stellung eines Gaspedals zu aktivieren. Dort wird die Feststellbremse zum Erzeugen einer fest vorgegebenen Bremskraft aktiviert, wenn das Gaspedal unbetätigt ist. Nachteilig ist hierbei, dass die von der Feststellbremse erzeugte Bremskraft fest vorgegeben ist, weshalb diese nicht geeignet sein kann, um das Kraftfahrzeug beispielsweise an einer starken Steigung im Stillstand zu halten. Ein weiterer Nachteil besteht darin, dass dort die Feststellbremse auch dann aktiviert wird, wenn das Gaspedal nicht betätigt wird, während sich das Kraftfahrzeug in einem Fahrbetrieb befindet. Dies kann insbesondere bei hohen Fahrzeuggeschwindigkeiten zu unerwünschten oder unkontrollierbaren Fahrzuständen führen, wenn beispielsweise ein Fahrzeugführer das Gaspedal nicht mehr betätigt, um das Kupplungspedal zu betätigen.

Die gattungsgemäße US 6,056,373 zeigt ein System zur Steuerung der Bremswirkung bei einem Kraftfahrzeug mit Mitteln zu einer von einer Fahrerbetätigung unabhängigen Einstellung der Bremswirkung. Wenn ein vorgebbarer Betriebsmodus erkannt wird, bei dem wenigstens die Fahrzeuglängsgeschwindigkeit Null festgestellt wird, wird eine bestimmte Bremswirkung aufgebracht. Bei Feststellen einer vorgebbaren Fahrzeuglängsgeschwindigkeit während des Betriebsmodus wird die Bremswirkung unabhängig vom Fahrer erhöht. Dieses System dient dazu eine vom Fahrer ungewollte Fahrzeugbewegung zu unterdrücken.

Aus der DE 36 18 532 A1 ist eine Vorrichtung bekannt, bei der mittels eines zwischen einem Hauptbremszylinder und Radbremszylindern einer Bremsanlage angeordneten Ventils ein Bremsbetätigungsdruck aufrechterhalten wird, der beim Anhalten eines Kraftfahrzeuges vorliegt. Hierbei wird durch Schließen des Ventils der Bremsbetätigungsdruck aufrechterhalten, der beim Anhalten des Kraftfahrzeuges mittels des Bremspedals durch den Fahrzeugführer vorgegeben wird. Zur Ermittlung des Stillstandes des Kraftfahrzeuges wird überprüft, ob dessen Geschwindigkeit Null ist, ob die Kupplung gelöst ist, ob der erste Gang oder der Rückwärtsgang eingelegt ist und ob der Neigungswinkel des Kraftfahrzeuges beim Anhalten einem vorbestimmten Neigungswinkel entspricht oder größer als dieser ist. Sind diese Bedingungen erfüllt, wird das Ventil geschlossen, wodurch der Fahrzeugführer das Bremspedal lösen kann, ohne dass dabei der zuvor vorgegebene Bremsbetätigungsdruck abgebaut wird. Nachteilig ist hierbei, dass ohne eine Betätigung des Bremspedals beim Erreichen des Stillstandszustandes keine Bremskräfte im Stillstand bereitgestellt werden. Dies ist beispielsweise der Fall, wenn das Kraftfahrzeug ohne Betätigung des Bremspedals in den Stillstand gebracht wird. Ferner ist es mit dieser Vorrichtung nicht möglich, für einen Stillstand erforderliche Bremskräfte zu erzeugen, wenn die Zündung des Kraftfahrzeuges ausgeschaltet ist.

Aus der nur zu EPÜ Art. 54(3) relevanten EP 1 335 846 B1 ist ein Verfahren zum Steuern einer im Stillstand eines Kraftfahrzeuges aktivierbaren Bremsausrüstung unabhängig von einer Betätigung der Bremsausrüstung mit folgenden Schritten bekannt:
- Ermitteln eines Betriebszustandes eines Kraftfahrzeuges, in dem sich das Kraftfahrzeug im Stillstand befindet, wobei zum Ermitteln des Stillstandes des Kraftfahrzeuges
   - Fahrzeugbewegungen erfasst werden, und
   - überprüft wird, ob die erfassten Fahrzeugbewegungen Fahrzeugbewegungen sind, die nicht bei Betriebszuständen auftreten können, in denen sich das Kraftfahrzeug in einem Fahrzustand befindet; und
- Steuern einer Bremsausrüstung des Kraftfahrzeuges, so dass unabhängig von einer Betätigung der Bremsausrüstung durch einen Fahrzeugführer Bremskräfte aufgebaut werden, die das Kraftfahrzeug im Stillstand halten.

### Aufgabe der Erfindung

Aufgabe der vorliegenden Erfindung ist es, ein Verfahren und ein System bereitzustellen, die es ermöglichen, eine bei Stillstand eines Kraftfahrzeuges gesteuert aktivierbare Brems-ausrüstung so zu steuern, dass die für den Stillstand benötigten Bremskräfte selbständig aufgebaut und beibehalten werden. Ferner sollen die im Stillstand bereitgestellten Bremskräfte geeignet sein, ein Kraftfahrzeug in unterschiedlichen Stillstandszuständen sicher gegen Wegrollen zu sichern.

### Kurzbeschreibung der Erfindung

Zur Lösung dieser Aufgabe stellt die Erfindung ein Verfahren zur Steuerung einer im Stillstand eines Kraftfahrzeuges aktivierbaren Bremsausrüstung mit den Merkmalen des Anspruchs 1 bereit.

Dabei wird der Stillstand des Kraftfahrzeuges ermittelt, indem Fahrzeugbewegungen erfasst und mit Fahrzeugbewegungen verglichen werden, die auftreten können, wenn sich das Kraftfahrzeug in einem Fahrzustand befindet. Fehlen solchefahrtypische Bewegungen, wird davon ausgegangen, dass sich das Kraftfahrzeug im Stillstand befindet. ,

Ferner kann der Aufbau der für den Stillstand erforderlichen Bremskräfte davon abhängig durchgeführt werden, ob beim oder nach Erreichen des Stillstandes der von einer von der Brems-ausrüstung umfassten Betriebsbremseinrichtung erzeugte Bremsdruck gleich oder größer als ein vorgegebener Referenzbremsdruck ist. Der von der Betriebsbremseinrichtung bereitgestellte Bremsdruck kann durch den Fahrzeugführer, beispielsweise durch Betätigung eines Bremspedales, und/oder von einer Steuerungseinrichtung für die Betriebsbremseinrichtung, beispielsweise einem Bremsassistenten, vorgegeben sein.

Des weiteren kann in diesem Fall der Aufbau der für den Stillstand erforderlichen Bremskräfte erst dann durchgeführt werden, wenn der von der Betriebsbremseinrichtung beim oder nach Erreichen des Stillstandes erzeugte Bremsdruck für eine vorbestimmte Zeitdauer vorliegt.

Vorzugsweise werden die für den Stillstand erforderlichen Bremskräfte durch eine entsprechend aktivierte Feststellbremseinrichtung der Bremsausrüstung bereitgestellt.

Um zu vermeiden, dass die Bremsausrüstung zum Aufbau der für den Stillstand erforderlichen Bremskräfte aktiviert wird, wenn das Kraftfahrzeug (unmittelbar) nach Erreichen des Stillstandszustandes wieder in einen Fahrzustand gebracht werden soll, wird der Aufbau der Stillstandsbremskräfte nach einer vorbestimmten Zeitdauer nach Erreichen des Stillstandes durchgeführt.

Ferner ist es zu bevorzugen, die für den Stillstand erforderlichen Bremskräfte in Abhängigkeit des jeweiligen Stillstandszustandes und/oder des dabei vorliegenden Betriebszustandes des Kraftfahrzeuges aufzubauen. Hierfür kann beispielsweise die Bremsausrüstung so gesteuert werden, dass deren Bremskräfte den beim Erreichen des Stillstandes bereitgestellten Bremskräften entsprechen, und/oder Bremskräften entsprechen, die in Abhängigkeit einer Neigung des Kraftfahrzeuges im Stillstand und/oder des Fahrzeuggewichtes ermittelt werden. Des weiteren ist es möglich, Stillstandsbremskräfte zu erzeugen, die gegenüber den beim Erreichen des Stillstandes bereitgestellten Bremskräften um einen vorbestimmten Wert erhöht sind. Ferner ist es möglich, die Bremsausrüstung abhängig von deren erzeugten Klemmkräften zu steuern, wobei die erzeugten Klemmkräfte im Verhältnis zu maximal bereitstellbaren Bremskräften eingestellt werden.

Verfügt das Kraftfahrzeug über eine Betriebsbremseinrichtung, die nicht nur durch den Fahrzeugführer betätigt, sondern auch gesteuert betrieben werden kann, ist es vorgesehen, zum Aufbau der für den Stillstand erforderlichen Bremskräfte eine solche Betriebsbremseinrichtung als Komponente der Bremsausrüstung zu aktivieren.

Hierbei ist es zu bevorzugen, die Betriebsbremsausrüstung für eine vorbestimmte Zeitdauer zu aktivieren. Nach einer weiteren vorbestimmten Zeitdauer nach dem Zeitpunkt, an dem die Betriebsbremseinrichtung aktiviert wurde, kann dann die Feststellbremseinrichtung zum Aufbau der für den Stillstand erforderlichen Bremskräfte aktiviert werden, um die Funktion der Betriebsbremseinrichtung zu übernehmen. Aus Sicherheitsgründen ist es vorteilhaft, wenn die Betriebsbremseinrichtung und die Feststellbremseinrichtung während einer vorbestimmten Zeitdauer gleichzeitig aktiviert sind, wobei in diesem Fall die Betriebsbremseinrichtung nach einer vorbestimmten Zeitdauer nach dem Zeitpunkt, an dem die Feststellbremseinrichtung aktiviert wurde, deaktiviert wird.

Ferner stellt die vorliegende Erfindung ein System zur Steuerung einer im Stillstand eines Kraftfahrzeuges aktivierbaren Bremsausrüstung bereit, die eine Steuereinrichtung sowie Erfassungseinrichtungen zum Erfassen von Parametern, die aktuelle Betriebszustände des Kraftfahrzeuges charakterisieren, und Schnittstellen zur Steuerung einer Bremsausrüstung aufweist. Hierbei wird die Bremsausrüstung gemäß einem der erfindungsgemäßen Verfahren betrieben.

Außerdem betrifft die vorliegende Erfindung ein Computerprogrammprodukt mit Programmcodeteilen, die eine Ausführung von Ausführungsformen des erfindungsgemäßen Verfahrens ermöglichen.

### Kurzbeschreibung der Figuren

In der folgenden Beschreibung wird auf die beigefügten Figuren Bezug genommen, von denen zeigen:
- Fig. 1: eine schematische Darstellung eines erfindungsgemäßen Systems zur Steuerung einer im Stillstand eines Kraftfahrzeuges aktivierbaren Bremsausrüstung,
- Fig. 2: ein Flußdiagramm einer Ausführungsform eines erfindungsgemäßen Verfahrens zum Aktivieren einer steuerbaren Bremsausrüstung,
- Fig. 3: ein Flußdiagramm einer weiteren Ausführungsform eines erfindungsgemäßen Verfahrens zum Aktivieren einer steuerbaren Bremsausrüstung,
- Fig. 4: ein Flußdiagramm einer Ausführungsform eines erfindungsgemäßen Verfahrens zum Deaktivieren einer steuerbaren Bremsausrüstung, und
- Fig. 5: ein Flußdiagramm einer Ausführungsform eines erfindungsgemäßen Verfahrens zum Reaktivieren einer steuerbaren Bremsausrüstung.

### Beschreibung bevorzugter Ausführungsformen

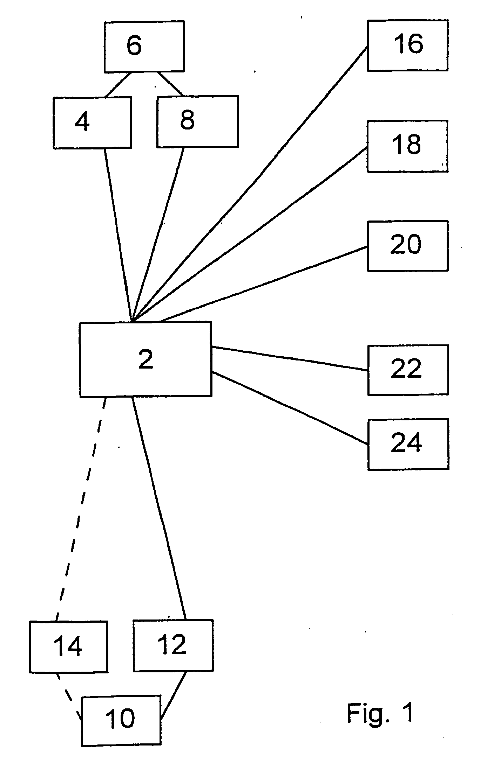

Das in Fig. 1 dargestellte System 1 zur Steuerung einer im Stillstand eines Kraftfahrzeuges aktivierbaren Bremsausrüstung kann eine separat ausgeführte Einrichtung des Kraftfahrzeuges sein, wenigstens teilweise schon vorhandene Komponenten weiterer Systeme des Kraftfahrzeuges verwenden oder von einem System umfasst sein, das weitere Steuerungs- und Kontrollfunktionen für das Kraftfahrzeug bereitstellt.

Das System 1 weist eine Steuereinrichtung 2 auf, die über eine Schnittstelle 4 eine Feststellbremseinrichtung 6 eines Kraftfahrzeuges (nicht gezeigt) steuert. Über eine Sensoreinrichtung 8 erfasst die Steuereinrichtung 2 Parameter, die den aktuellen Betriebszustand der Feststellbremseinrichtung 6 charakterisieren.

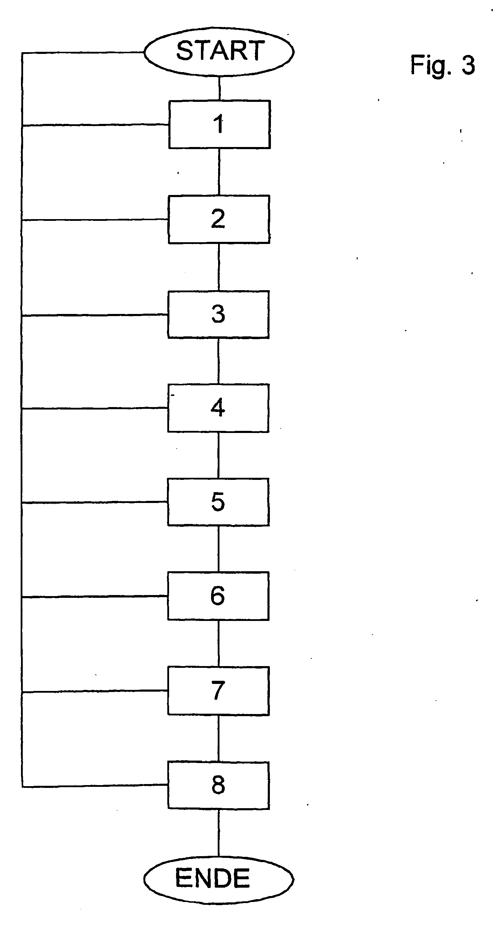

Betriebszustände einer Betriebsbremseinrichtung 10 werden über eine Sensoreinrichtung 12 ermittelt. Wenn die Betriebsbremseinrichtung 10 steuerbar ist, d.h. alternativ oder ergänzend zu Betätigungen durch einen Fahrzeugführer gesteuert betrieben werden kann, ist die Steuereinrichtung 2 über eine Schnittstelle 14 zur Steuerung der Betriebsbremseinrichtung 10 verbunden. Die Funktion und der Betrieb dieser optionalen in Fig. 1 durch gestrichelte Linien angedeutete Ausführung des Systems 1 wird im folgenden unter Bezugnahme auf Fig. 3 näher erläutert.

Ferner ist die Steuereinrichtung 2 mit einem Neigungssensor 16 verbunden, um die aktuelle Neigung oder aktuelle Neigungsänderungen des Kraftfahrzeuges zu detektieren. Bei dieser Ausführungsform wird davon ausgegangen, dass der Neigungssensor Neigungen und/oder dynamische Bewegungen des Kraftfahrzeuges um dessen Querachse erfasst. Der Einfachheit halber werden im folgenden Neigungen und/oder Bewegungen des Kraftfahrzeuges um dessen Längsachse nicht berücksichtigt, auch wenn es alternativ oder ergänzend vorgesehen ist, beim Betrieb des Systems 1 Neigungen und/oder Bewegungen des Kraftfahrzeuges um seine Längsachse zu verwenden.

Über eine Schnittstelle 18 werden der Steuereinrichtung 2 Daten/Signale zugeführt, die für eine externe Steuerung der Steuereinrichtung 2 dienen. Hierbei ist es vorgesehen, dass die Schnittstelle 18 zur Eingabe entsprechender Steuerinformationen für die Steuereinrichtung 2 durch einen Fahrzeugführer (z.B. Spracheingabe, "Touch panel", Betätigung von Schaltern, Tastern und dergleichen) ausgelegt ist, mechanisch betätigbare Komponenten umfasst und/oder zur Übertragung geeigneter Steuersignale für die Steuereinrichtung 2 von einer nicht gezeigten Fahrzeugsteuerung ("Motormanagementsystem") dient.

Außerdem ist die Steuereinrichtung 2 mit einem Geschwindigkeitssensor 20 zur Erfassung aktueller Fahrzeuggeschwindigkeiten, einem Raddrehzahlsensor 22 zur Erfassung von Drehzahlen einzelner oder mehrerer Räder und einem Motordrehzahlsensor 24 zur Erfassung aktueller Motordrehzahlen verbunden.

Über eine Schnittstelle 26 empfängt die Steuereinrichtung 2 von weiteren Komponenten (nicht gezeigt) des Kraftfahrzeuges bereitgestellte Daten, die zusätzlich zu den oben genannten Größen weitere Informationen über den Betriebszustand des Fahrzeuges liefern. Beispiele hierfür sind Informationen, die fehlerfreie und/oder fehlerhafte Betriebszustände eines Fahrzeugmanagementsystems, eines Antiblockiersystems (ABS) und von Systemen zur Traktions- und Stabilitätskontrolle charakterisieren, den Reifenluftdruck einzelner oder mehrerer Reifen sowie verfügbare Mengen an Betriebsstoffen angeben.

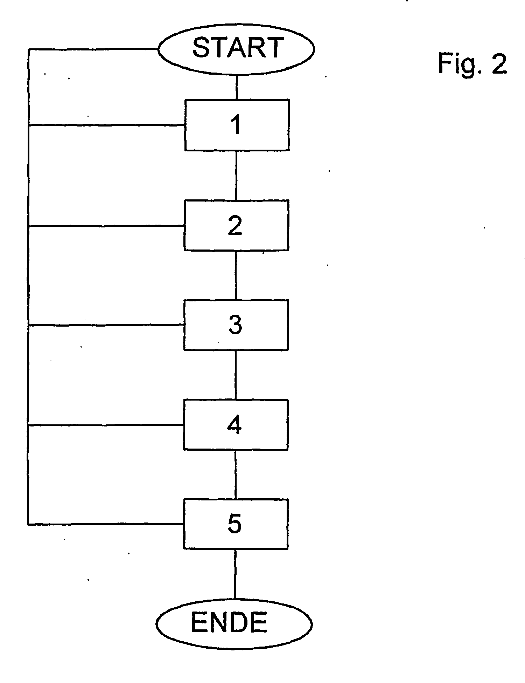

Unter Bezugnahme auf das in Fig. 2 dargestellte Flußdiagramm wird der Betrieb des Systems 1 zur Steuerung einer Bremsausrüstung eines Kraftfahrzeuges beschrieben, bei der die Betriebsbremseinrichtung 10 durch einen Fahrzeugführer betätigbar, aber nicht von der Steuereinrichtung 2 steuerbar ist.

Um die Bremsausrüstung des Kraftfahrzeuges, genauer die Feststellbremseinrichtung 6, so zu steuern, dass sie im Stillstand des Kraftfahrzeuges aktiviert ist und in Abhängigkeit des eweiligen Stillstandszustandes erforderliche Bremskräfte erzeugt, ist zu ermitteln, ob sich das Kraftfahrzeug im Stillstand befindet. Hierfür wird in Schritt 1 überprüft, ob die Zündung des Kraftfahrzeuges eingeschaltet ist. Unter einem eingeschalteten Zustand der Zündung wird in diesem Zusammenhang nicht nur der Betriebszustand des Kraftfahrzeuges verstanden, in dem dessen Motor läuft, sondern auch Betriebszustände, in denen der Start des Motors möglich ist. Der letzte Fall betrifft Kraftfahrzeuge, bei denen der Motor im Stillstand und/oder im Fahrbetrieb automatisch abgeschaltet wird, wenn keine Motorkraft benötigt wird (z.B. beim Ausrollenlassen des Kraftfahrzeuges). Ein eingeschalteter Zustand der Zündung liegt in diesem Fall dann vor, wenn der Motor beispielsweise durch Betätigung eines Gaspedales wieder gestartet werden kann.

In Schritt 2 wird die aktuelle Fahrzeuggeschwindigkeit erfasst, um festzustellen, ob sich das Fahrzeug bewegt oder steht. Wenn die detektierte Fahrzeuggeschwindigkeit gleich Null ist, wird in Schritt 3 mittels des Neigungssensors 16 festgestellt, ob sich das Kraftfahrzeug tatsächlich im Stillstand befindet.

Im allgemeinen weist ein Kraftfahrzeug im Fahrbetrieb hierfür charakteristische dynamische Bewegungen auf. Dementsprechend kann festgestellt werden, ob sich ein Kraftfahrzeug im Stillstand befindet oder nicht, wenn Bewegungen des Kraftfahrzeuges nicht den für den Fahrbetrieb typischen Bewegungen entsprechen.

Mit dem Neigungssensor 18 werden aktuelle Neigungen des Kraftfahrzeuges, genauer Neigungsänderungen um dessen Querachse (gemäß der Ausführungsform von Fig. 1) detektiert. Liegen die erfassten Fahrzeugbewegungen in einem Bereich, in dem fahrtypische Fahrzeugbewegungen liegen können, ist davon auszugehen, dass sich das Kraftfahrzeug nicht im Stillstand befindet. Demgegenüber kann festgestellt werden, dass sich das Kraftfahrzeug im Stillstand befindet, wenn die erfassten Fahrzeugbewegungen nicht in dem Bereich der fahrtypischen Bewegungen liegen.

Wird in Schritt 3 das Fehlen fahrtypischer Fahrzeugbewegungen ("Nickbewegungen") ermittelt, wird unter Verwendung der Sensoreinrichtung 12 in Schritt 4 überprüft, ob der von der Betriebsbremseinrichtung 10 (durch Betätigung eines Fahrzeugführers) erzeugte Bremsdruck größer als ein vorgegebener Referenzbremsdruck pB_{ref} ist. Um zu vermeiden, dass die Feststellbremseinrichtung 6 aktiviert wird, wenn das Kraftfahrzeug nach Erreichen des Stillstandszustandes wieder in einen Fahrbetrieb übergehen soll, ist es vorgesehen, zu überprüfen, ob der Bremsdruck der Betriebsbremseinrichtung 10 für eine vorbestimmte Zeitdauer Bt (z.B. 1-2 Sekunden) über dem vorgegebenen Bremsdruck pB_{ref} (z.B. 5 bar) liegt.

Danach wird in Schritt 5 über die Schnittstelle 4 die Feststellbremseinrichtung 6 aktiviert, wobei eine Aktivierungsverzögerung um eine vorgegebene Zeitdauer (z.B. 1-2 Sekunden) vorteilhaft ist. Die Einstellung des von der Feststellbremseinrichtung 6 erzeugten Bremsdruckes, der geeignet ist, das Kraftfahrzeug im Stillstand zu halten, kann auf unterschiedliche Weise vorgenommen werden. Die Feststellbremseinrichtung 6 kann so gesteuert werden, dass sie bei jeder derartigen Aktivierung einen vorgegebenen Bremsdruck (z.B. 5 bar) erzeugt, einen Bremsdruck erzeugt, der gegenüber dem von der Betriebsbremseinrichtung 10 zuvor erzeugten Bremsdruck um einen vorgegebenen Wert (z.B. 5 bar) erhöht ist, oder einen Bremsdruck erzeugt, der in Abhängigkeit der im Stillstand mit dem Neigungssensor 16 erfassten Neigung des Kraftfahrzeuges festgelegt wird. Als Richtwert kann beim Festlegen der Feststellbremseinrichtung 6 auch die durch diese erzeugte Klemmkraft verwendet werden, die beispielsweise in Abhängigkeit des Fahrzeugtyps, in dem das System 1 verwendet wird, mehr als zwei Drittel der maximal möglichen Klemmkraft betragen soll.

Um zu gewährleisten, dass bei Fehlfunktionen des Systems 1 oder damit verbundener weiterer Steuerungs- und Kontrolleinrichtungen des Kraftfahrzeuges die im Stillstand benötigte Bremskraft aufgebracht wird, sollte in derartigen Fällen die Steuereinrichtung 2 die Feststellbremseinrichtung 6 im Stillstand so steuern, dass diese die maximal mögliche Bremskraft erzeugt. Da sich hierbei das Kraftfahrzeug im Stillstand befindet, führt diese Vorgehensweise nicht zu Beschädigungen oder Verschleißerscheinungen der Radbremsen. Angesichts der Tatsache, dass die Feststellbremseinrichtung 6 zu lösen ist, wenn das Kraftfahrzeug aus dem Stillstand in einen Fahrbetrieb gebracht werden soll, ist es zu bevorzugen, dass die Erzeugung der maximal möglichen Bremskraft durch die Feststellbremseinrichtung 6 im Stillstand auf derartige nicht normale Betriebszustände beschränkt wird. Folglich kann im Normalbetrieb des Systems 1 die im Stillstand erzeugte Bremskraft beim Übergang in einen Fahrbetrieb schnell abgebaut werden.

Unter Bezugnahme auf das in Fig. 3 dargestellte Flußdiagrammwird der Betrieb des Systems 1 für die Ausführungsform beschrieben, bei der die Betriebsbremseinrichtung 10 durch die Steuereinrichtung 2 steuerbar ist.

Um festzustellen, ob sich das Kraftfahrzeug im Stillstand befindet, werden Schritte 1, 2 und 3 durchgeführt, die den Schritten 1, 2 und 3 gemäß Fig. 2 entsprechen.

Schritt 4, der dem oben erläuterten Schritt 4 entspricht, ist bei dieser Vorgehensweise optional vorgesehen, was durch die gestrichelten Linien in Fig. 3 angedeutet ist.

Befindet sich das Kraftfahrzeug im Stillstand, wird gemäß Schritt 5 die Betriebsbremseinrichtung 10 durch die Steuereinrichtung 2 aktiviert, wobei diese Aktivierung unmittelbar bei Erreichen des Stillstandes oder nach einer vorgegebenen Zeitdauer (z.B. 1-2 Sekunden) erfolgen kann. Der von der Betriebsbremseinrichtung 10 in diesem Zustand zu erzeugende Bremsdruck kann, wenn der optionale Schritt 4 durchgeführt wurde, in Abhängigkeit des zuvor durch eine Betätigung der Betriebsbremseinrichtung 10 durch einen Fahrzeugführer aufgebauten Bremsdruckes und/oder der aktuellen Neigung des Kraftfahrzeuges ermittelt oder auf einen vorgegebenen Wert eingestellt werden.

Hierbei ist zu berücksichtigen, dass für den Betrieb der Betriebsbremseinrichtung 10 eine Energieversorgung bereitgestellt ist, wenn in diesem Betriebszustand des Kraftfahrzeuges die Zündung ausgeschaltet wird.

Danach wird in Schritt 6 nach Ablauf einer vorgegebenen Zeitdauer (z.B. 30 Sekunden und länger) die Feststellbremseinrichtung 6 aktiviert, wobei deren Bremskräfte, wie oben unter Bezugnahme auf Schritt 5 von Fig. 2 erläutert, ermittelt oder vorgegeben eingestellt werden.

Nachfolgend wird in Schritt 7 die Betriebsbremseinrichtung 10 deaktiviert, da deren Bremskräfte zum Aufrechterhalten des Stillstandes nicht mehr erforderlich sind. Hierbei wird die Betriebsbremseinrichtung 10 so gesteuert, dass deren erzeugten Bremskräfte vorzugsweise nach einer vorgegebenen Zeitdauer (z.B. 1-2 Sekunden) langsam abgebaut werden.

Zur Bestimmung der von der Feststellbremseinrichtung 6 verursachten Klemmkräfte ist es vorgesehen, den optionalen Schritt 8 durchzuführen, indem die Feststellbremseinrichtung kurzfristig deaktiviert wird. Während der kurzfristigen Deaktivierung, die beispielsweise 60 Millisekunden andauern kann, werden dann die von der Feststellbremseinrichtung 6 erzeugten Klemmkräfte mittels geeigneter Erfassungseinrichtungen (z.B. der Sensoreinrichtung 8) detektiert.

Bei den unter Bezugnahme auf Fig. 2 und 3 erläuterten Vorgehensweisen ist es möglich, die Schritte 1 und 2 wegzulassen, wenn die in den Schritten 3 durchgeführte Stillstandserkennung auf der Grundlage von Fahrzeugneigungen (-änderungen) gewährleistet, dass ein Stillstand des Kraftfahrzeuges sicher erkannt wird. Des weiteren können bei der Ermittlung von der Feststellbremseinrichtung 6 und/oder der Betriebsbremseinrichtung 10 zu erzeugenden Bremskräfte und/oder Klemmkräfte neben der aktuellen Neigung des Kraftfahrzeuges weitere Parameter verwendet werden, wie z.B. das Fahrzeuggewicht, die Oberflächenbeschaffenheit der jeweiligen Fahrbahn und die Außentemperatur.

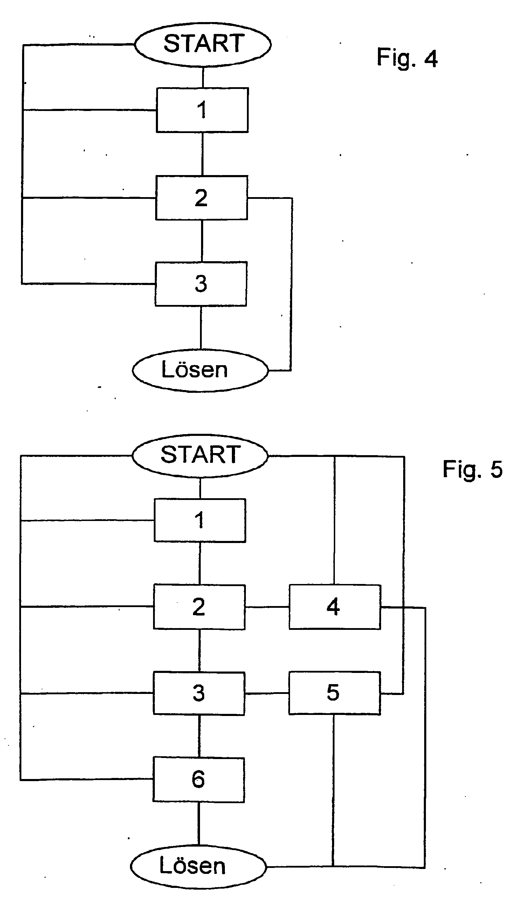

Wenn das Kraftfahrzeug aus dem Stillstand in einen Fahrzustand gebracht werden soll, wird das System 1 gemäß der in Fig. 4 als Flußdiagramm dargestellten Vorgehensweise betrieben.

Wenn in Schritt 1 festgestellt wird, dass die Feststellbremseinrichtung 6 aktiviert ist, um das Kraftfahrzeug im Stillstand zu halten, wird n Schritt 2 überprüft, ob das Kraftfahrzeug aus dem Stillstand in einen Fahrbetrieb übergehen soll. Ist dies der Fall, wird die Feststellbremseinrichtung 6 deaktiviert, um den gewünschten Fahrbetrieb zuzulassen.

Wird kein gewünschter Übergang in einen Fahrbetrieb erkannt, wird in Schritt 3 überprüft, ob über die Schnittstelle 18 zugeführte Steuersignale für die Steuereinrichtung 2 vorliegen. Derartige Steuersignale können beispielsweise durch Betätigung eines Schalters oder Tasters durch einen Fahrzeugführer oder von einem Steuer- und Kontrollsystem des Kraftfahrzeuges erzeugt werden. Wird ein Steuersignal erkannt, das angibt, dass die Feststellbremseinrichtung 6 zu lösen ist, wird unter Steuerung der Steuereinrichtung 2 die Feststellbremseinrichtung 6 deaktiviert, um den im Stillstand erzeugten Bremsdruck abzubauen. Demgegenüber-bleibt die Feststellbremseinrichtung 6 aktiviert, wenn weder ein Übergang in einen Fahrbetrieb erfolgen soll noch ein zum Lösen der Feststellbremseinrichtung 6 geeignetes Steuersignal empfangen wird. Hierbei ist es vorgesehen, die Schritte 2 oder 3 auch in umgekehrter Reihenfolge durchzuführen.

Aus Sicherheitsgründen wird das System 1 ferner gemäß der in Fig. 5 skizzierten Vorgehensweise betrieben, um, falls erforderlich, die Feststellbremseinrichtung 6 zu reaktivieren. Wenn in Schritt 1 festgestellt wird, dass die Feststellbremseinrichtung 6 aktiviert ist, wird in Schritt 2, der dem oben erläuterten Schritt 2 von Fig. 4 entspricht, eine Anfahrerkennung durchgeführt. Wird hierbei festgestellt, dass das Kraftfahrzeug aus dem Stillstand bewegt werden soll, wird in Schritt 4 mittels der Raddrehzahlsensoren 22 die Drehzahl einzelner oder mehrerer Räder erfasst. Werden keine Radbewegungen detektiert, wird die Feststellbremseinrichtung 6 erneut aktiviert, um das Kraftfahrzeug zu sichern. Demgegenüber wird die Feststellbremseinrichtung 6 deaktiviert, wenn hier Raddrehzahlen ermittelt werden.

Wenn in Schritt 3, der dem Schritt 3 gemäß Fig. 4 entspricht, ein Steuersignal zum Lösen der Feststellbremseinrichtung 6 erfasst, wird in Schritt 5 überprüft, ob sich das Kraftfahrzeug in nicht gewünschter Weise bewegt. Dies ist beispielsweise der Fall, wenn die Zündung nicht eingeschaltet ist, und/oder der Fahrzeugmotor nicht läuft, und/oder Motordrehzahlen und/oder Motordrehmomente vorliegen, die nicht ausreichen, um das Fahrzeug aus dem Stillstand zu bewegen, wenn gleichzeitig erkannt wird, dass sich die Fahrzeugräder drehen. Dementsprechend wird die Feststellbremseinrichtung 6 reaktiviert, um die für den Stillstand erforderlichen Bremskräfte zu erzeugen.

Ferner wird in Schritt 6 überprüft, ob weitere Bedingungen erfüllt sind, die eine erneute Aktivierung der Feststellbremseinrichtung 6 erforderlich machen. Hierzu zählen beispielsweise Betätigungen der Betriebsbremseinrichtung 10 durch einen Fahrzeugführer, für einen Stillstand oder ein Anhalten typische Bewegungen (Nickbewegungen) des Kraftfahrzeuges, und dergleichen.

Vergleichbar zu Fig. 4 können auch die Schritte 2, 3 und 4 gemäß Fig. 5 in unterschiedlicher Reihenfolge durchgeführt werden.

## Patentansprüche

1. Verfahren zum Steuern einer im Stillstand eines Kraftfahrzeuges aktivierbaren Bremsausrüstung unabhängig von einer Betätigung der Bremsausrüstung (6, 10), mit folgenden Schritten:
- Ermitteln eines Betriebszustandes eines Kraftfahrzeuges, in dem sich das Kraftfahrzeug im Stillstand befindet, wobei zum Ermitteln des Stillstandes des Kraftfahrzeuges
- Fahrzeugbewegungen erfasst werden, und
- überprüft wird, ob die erfassten Fahrzeugbewegungen Fahrzeugbewegungen sind, die nicht bei Betriebszuständen auftreten können, in denen sich das Kraftfahrzeug in einem Fahrzustand befindet; und
- Steuern einer Bremsausrüstung (6, 10) des Kraftfahrzeuges, so dass unabhängig von einer Betätigung der Bremsausrüstung (6, 10) durch einen Fahrzeugführer Bremskräfte aufgebaut werden, die das Kraftfahrzeug im Stillstand halten, wobei
die Bremsausrüstung (6, 10) zum Aufbau der für den Stillstand erforderlichen Bremskräfte nach einer vorbestimmten Zeitdauer nach Erreichen des Stillstandes gesteuert wird.

2. Verfahren gemäß Anspruch 1, bei dem zum Ermitteln des Stillstandes des Kraftfahrzeuges Fahrzeugbewegungen in Form von
- dynamischen Bewegungen,
- Neigungen des Kraftfahrzeuges um dessen Querachse und/oder Längsachse, oder
- Neigungsänderungen des Kraftfahrzeuges um dessen Querachse und/oder Längsachse
erfasst werden.

3. Verfahren gemäß Anspruch 1 oder 2, bei dem
- die Bremsausrüstung (6, 10) zum Aufbau der für den Stillstand erforderlichen Bremskräfte gesteuert wird, wenn nach Erreichen des Stillstandes der von einer Betriebsbremseinrichtung (10) erzeugte Bremsdruck gleich oder größer als ein vorgegebener Referenzbremsdruck (pB_{ref}) ist.

4. Verfahren gemäß Anspruch 3, bei dem
- die Bremsausrüstung (6, 10) zum Aufbau der für den Stillstand erforderlichen Bremskräfte gesteuert wird, wenn der von der Betriebsbremseinrichtung (10) erzeugte Bremsdruck für eine vorbestimmte Zeitdauer (Bt) vorliegt.

5. Verfahren gemäß einem der vorhergehenden Ansprüche, bei dem
- beim Steuern der Bremsausrüstung (6, 10) zum Aufbau der für den Stillstand erforderlichen Bremskräfte eine Feststellbremseinrichtung (6) aktiviert wird.

6. Verfahren gemäß einem der vorhergehenden Ansprüche, bei dem
- die vorbestimmte Zeitdauer zwischen Erreichen des Stillstands und Aufbau der für den Stillstand erforderlichen Bremskräfte einen Zeitdauer von 1 bis 2 Sekunden umfasst..

7. Verfahren gemäß einem der vorhergehenden Ansprüche, bei dem
- bei dem die Bremsausrüstung (6, 10) zum Aufbau der für den Stillstand erforderlichen Bremskräfte so gesteuert wird, dass die Bremskräfte den beim Erreichen des Stillstandes bereitgestellten Bremskräften entsprechen, und/oder Bremskräften entsprechen, die in Abhängigkeit einer Neigung des Kraftfahrzeuges im Stillstand und/oder des Fahrzeuggewichtes ermittelt werden, und/oder einer
Bremskraft entsprechen, die gegenüber den beim Erreichen des Stillstandes bereitgestellten Bremskräften um einen vorbestimmten Wert erhöht sind, und/oder dass Klemmkräfte erzeugt werden, die zu maximal möglichen Bremskräften in einem vorbestimmten Verhältnis stehen.

8. Verfahren gemäß einem der vorhergehenden Ansprüche, bei dem
- beim Steuern der Bremsausrüstung (6, 10) zum Aufbau der für den Stillstand erforderlichen Bremskräfte eine Betriebsbremseinrichtung (10) aktiviert wird.

9. Verfahren gemäß Anspruch 8, bei dem
- die Betriebsbremsausrüstung (10) für eine vorbestimmte Zeitdauer aktiviert wird.

10. Verfahren gemäß Anspruch 8 oder 9, bei dem
- eine Feststellbremseinrichtung (6) nach einer vorbestimmten Zeitdauer nach dem Aktivieren der Betriebsbremseinrichtung (10) aktiviert wird.

11. Verfahren gemäß Anspruch 10, bei dem
- die Betriebsbremseinrichtung (10) nach einer vorbestimmten Zeitdauer nach dem Aktivieren der Feststellbremseinrichtung (6) deaktiviert wird.

12. Verfahren gemäß Anspruch 11, bei dem
- die Feststellbremseinrichtung (6) nach dem Deaktivieren der Betriebsbremseinrichtung (10) für eine vorbestimmte Zeitdauer deaktiviert wird, um Parameter zu ermitteln, die von der Feststellbremseinrichtung (6) bereitgestellte Bremskräfte charakterisieren.

13. System zur Steuerung einer im Stillstand eines Kraftfahrzeuges aktivierbaren Bremsausrüstung, mit:
- einer Steuereinrichtung (2) und
- Erfassungseinrichtungen (8, 12, 16, 18, 20, 22, 24, 26) zum Erfassen von Parametern, die aktuelle Betriebszustände des Kraftfahrzeuges charakterisieren, und Schnittstellen (4, 14) zur Steuerung einer Bremsausrüstung (6, 10), wobei die Steuereinrichtung (2) ausgelegt ist, gemäß einem der Verfahren nach einem der Ansprüche 1 bis 12 betrieben zu werden.

14. Computerprogrammprodukt, mit
- Programmcodeteilen zur Ausführung der Schritte gemäß einem der Ansprüche 1 bis 12.

15. Computerprogrammprodukt gemäß Anspruch 14,
gespeichert auf einem computerlesbaren Aufzeichnungsmedium oder in einer computerlesbaren Aufzeichnungsvorrichtung.

## Claims

1. A method for controlling a braking equipment adapted to be activated at a state of standstill of a motor vehicle independently of an actuation of the braking equipment (6, 10), comprising the following steps:
- establishing an operating state of a motor vehicle in which the motor vehicle is in the state of standstill, wherein, in order to establish the state of standstill of the motor vehicle
- vehicle movements are detected, and
- it is checked whether the detected vehicle movements are vehicle movements that cannot occur during operating states in which the motor vehicle is in a driving state; and
- controlling a braking equipment (6, 10) of the motor vehicle so that, independently of an actuation of the braking equipment by a vehicle driver, braking forces are build up to hold the motor vehicle in a state of standstill,
wherein
the braking equipment (6, 10) is controlled after a predetermined period of time after reaching the state of standstill to build up the braking forces necessary for the state of standstill.

2. The method according to claim 1, in which for detecting the state of standstill of the motor vehicle, vehicle movements in the form of
- dynamic movements,
- inclinations of the motor vehicle about its transverse and/or longitudinal axis, or
- changes in the inclination of the motor vehicle about its transverse and/or longitudinal axis are detected.

3. The method according to claim 1 or 2, in which
- the braking equipment (6, 10) is controlled to build up the braking forces necessary for the state of standstill if, upon reaching the state of standstill, the brake pressure generated by a service braking device (10) is equal to or larger than a preset reference brake pressure (pB_{ref}).

4. The method according to claim 3, in which
- the braking equipment (6, 10) is controlled to build up the braking forces necessary for the state of standstill when the brake pressure generated by the service braking device (10) is present for a predetermined period of time (Bt).

5. The method according to one of the proceeding claims, in which
- a holding brake mechanism (6) is activated to build up the braking forces necessary for the state of standstill during the control of the braking equipment (6, 10).

6. The method according to one of the proceeding claims, in which
- the predetermined period of time between the reaching the state of standstill and the build up of the braking forces necessary for the state of standstill includes a period of 1 to 2 seconds.

7. The method according to one of the proceeding claims, in which
- the braking equipment (6, 10) is controlled in such a manner to build up the braking forces necessary for the state of standstill so that the braking forces correspond to the braking forces available when reaching the state of standstill, and/or to braking forces which are detected in response to an inclination of the motor vehicle in the state of standstill and/or the vehicle weight, and/or correspond to braking forces that are elevated at a predetermined value with respect to the braking forces available when reaching the state of standstill, and/or that clamping forces are generated which have a predetermined ratio relative to maximally possible braking forces.

8. The method according to one of the proceeding claims, in which
- a service braking device (10) is activated by controlling the braking equipment (6, 10) to build up the braking forces necessary for the state of standstill.

9. The method according to claim 8, in which
- the service braking device (10) is activated for a specific period of time.

10. The method according to claim 8 or 9, in which
- a holding brake mechanism (6) is activated after a predetermined period of time after the activation of the service braking device (10).

11. The method according to claim 10, in which
- the service braking device (10) is deactivated after a predetermined period of time after the activation of the holding brake mechanisms (6).

12. The method according to claim 11, in which
- the holding brake mechanism (6) is deactivated for a predetermined period of time after the deactivation of the service braking device (10) in order to detect parameters characterizing braking forces made available by a holding brake mechanism (6).

13. A system for controlling a braking equipment adapted to be activated in the state of standstill of a motor vehicle, comprising:
- a control unit (2) and
- detection means (8, 12, 16, 18, 20, 22, 24, 26) for detecting parameters characterizing current operating states of the motor vehicle, and interfaces (4, 14) for controlling a braking equipment (6, 10) with the control unit (2) being adapted to be operated according to one of the methods of one of the claims 1 to 12.

14. A computer program product having
- program code portions for performing the steps according to one of the claims 1 to 12.

15. The computer program product according to claim 14,
stored on a computer readable recording medium of a computer readable recording device.

## Revendications

1. Procédé de commande d'un dispositif de freinage activable lorsqu'un véhicule automobile est à l'arrêt, indépendamment d'un actionnement du dispositif de freinage (6, 10), comprenant les étapes suivantes :
- détermination d'un état de fonctionnement d'un véhicule, dans lequel le véhicule se trouve à l'arrêt, la détermination de l'arrêt du véhicule passant par
- la détection de mouvements de véhicule
- et la vérification que les mouvements de véhicule détectés sont des mouvements ne pouvant pas survenir dans les états de fonctionnement pendant lesquels le véhicule se trouve en état de marche ; et
- commande d'un dispositif de freinage (6, 10) du véhicule de sorte que soient produites, indépendamment d'un actionnement du dispositif de freinage (6, 10) par le conducteur, des forces de freinage qui maintiennent le véhicule à l'arrêt, le dispositif de freinage (6, 10) servant à produire les forces de freinage nécessaires au maintien à l'arrêt du véhicule étant commandé après une durée prédéfinie, une fois que le véhicule se trouve à l'arrêt.

2. Procédé selon la revendication 1, dans le cadre duquel sont détectés des mouvements du véhicule sous forme de
- mouvements dynamiques,
- d'inclinaisons du véhicule autour de son axe transversal et/ou de son axe longitudinal, ou
- des variations d'inclinaison du véhicule autour de son axe transversal et/ou de son axe longitudinal
pour déterminer que le véhicule se trouve à l'arrêt.

3. Procédé selon la revendication 1 ou 2, dans le cadre duquel
- le dispositif de freinage (6, 10) servant à produire les forces de freinage nécessaires au maintien à l'arrêt du véhicule est commandé lorsque la pression de freinage produite par le dispositif de freinage de service (10) est égale ou supérieure à une pression de freinage de référence donnée (bref), une fois que le véhicule se trouve à l'arrêt.

4. Procédé selon la revendication 3, dans le cadre duquel
- le dispositif de freinage (6, 10) servant à produire les forces de freinage nécessaires au maintien à l'arrêt du véhicule est commandé lorsque la pression de freinage produite par le dispositif de freinage de service (10) est maintenue pendant une durée donnée (Bt).

5. Procédé selon l'une des revendications précédentes, dans le cadre duquel
- un dispositif de freinage de stationnement (6) est activé lorsqu'est commandé le dispositif de freinage (6, 10) servant à produire les forces de freinage nécessaires au maintien à l'arrêt du véhicule.

6. Procédé selon l'une des revendications précédentes, dans le cadre duquel
- la durée prédéfinie entre l'atteinte de l'état d'arrêt et la production des forces de freinage nécessaires au maintien de l'arrêt du véhicule dure entre 1 à 2 secondes.

7. Procédé selon l'une des revendications précédentes, dans le cadre duquel
- le dispositif de freinage (6, 10) servant à produire les forces de freinage nécessaires au maintien à l'arrêt du véhicule est commandé de manière à ce que les forces de freinage correspondent aux forces de freinage fournies lorsque le véhicule se trouve à l'arrêt, et/ou correspondent à des forces de freinage qui sont déterminées en fonction d'une inclinaison du véhicule à l'arrêt et/ou du poids du véhicule, et/ou à une force de freinage qui est augmentée d'une valeur prédéfinie par rapport aux forces de freinage fournies lorsque le véhicule se trouve à l'arrêt, et/ou de manière à ce que soient produites des forces de blocage dans une proportion prédéfinie par rapport aux forces de freinage maximum possibles.

8. Procédé selon l'une des revendications précédentes, dans le cadre duquel
- un dispositif de freinage de service (10) est activé lorsqu'est commandé le dispositif de freinage (6, 10) servant à produire les forces de freinage nécessaires au maintien à l'arrêt du véhicule.

9. Procédé selon la revendication 8, dans le cadre duquel
- le dispositif de freinage de service (10) est activé pour une durée prédéfinie.

10. Procédé selon la revendication 8 ou 9, dans le cadre duquel
- un dispositif de freinage de stationnement (6) est activé après une durée prédéfinie après qu'a été activé le dispositif de freinage de service (10).

11. Procédé selon la revendication 10, dans le cadre duquel
- le dispositif de freinage de service (10) est désactivé après une durée prédéfinie après qu'a été activé le dispositif de freinage de stationnement (6).

12. Procédé selon la revendication 11, dans le cadre duquel
- le dispositif de freinage de stationnement (6) est désactivé pour une durée prédéfinie après qu'a été désactivé le dispositif de freinage de service (10) pour déterminer des paramètres qui caractérisent des forces de freinage fournies par le dispositif de freinage de stationnement (6).

13. Système pour la commande d'un dispositif de freinage activable lorsqu'un véhicule automobile se trouve à l'arrêt, comprenant :
- un dispositif de commande (2) et
- des dispositifs de détection (8, 12, 16, 18, 20, 22, 24, 26) servant à détecter des paramètres qui caractérisent des états de fonctionnement actuels du véhicule, et des interfaces (4, 14) permettant la commande d'un dispositif de freinage (6, 10), ledit dispositif de commande (2) étant conçu pour fonctionner selon l'un des procédés selon l'une des revendications 1 à 12.

14. Produit de programme d'ordinateur, comprenant :
- des parties de code de programme pour la réalisation des étapes selon l'une des revendications 1 à 12.

15. Produit de programme d'ordinateur selon la revendication 14,
enregistré sur un support d'enregistrement lisible par ordinateur ou dans un dispositif d'enregistrement lisible par ordinateur.
